# DEMANDE DE BREVET EUROPEEN

(11) **EP 4 223 453 A1**
(43) Date de publication de la demande: **09.08.2023**
(21) Numéro de dépôt: 23154726.6
(22) Date de dépôt: 02.02.2023
(51) Int. Cl.: B24B 37/27, B24B 37/34, B24B 41/06, B24B 41/00, B24B 7/16, B24B 7/17, B32B 37/22

(54) **EQUIPEMENT ET PROCÉDÉ DE POSE D'UN FILM SUR PORTE-PIÈCE EN FORME DE PLAQUE**

(30) Priorité: 03.02.2022 CH 99202022
(71) Demandeur: PBMC SA, 2416 Les Brenets (CH)
(72) Inventeur: Munier, Denis, 25130 Villers-le-Lac (FR); Mollard, Doniphan, 25210 Le Bizot (FR); Perrier, Eric, 1304 Dizy (CH)
(74) Mandataire: P&TS SA (AG, Ltd.)

(57) **Abrégé**

L'invention concerne un équipement (100) comportant :
- un mandrin amont (112) pour une bobine d'alimentation (40) portant un ruban continu dont une portion est apte à former un film (34) destiné à recouvrir une plaque support (20),
- un mandrin aval (114),
- une station d'assemblage comprenant :
* une base (122) comportant un premier plateau (124),
* un actionneur (126) avec une partie mobile (129) portant un deuxième plateau (128),

le deuxième plateau (128) ou le premier plateau (124) étant apte à recevoir une plaque support (20),
dans lequel le deuxième plateau (128) est apte à coopérer avec ledit premier plateau (124), pour former un outillage apte à mettre en contact ledit film (34) et ladite plaque support (20) lorsque la portion du ruban (30) formant le film (34) est située entre le deuxième plateau (128) et le premier plateau (124), en regard de ladite plaque support (20).

## Description

### Domaine technique

La présente invention concerne un équipement et un procédé de pose d'un film sur une plaque support présentant des ouvertures traversantes, en particulier une plaque formant un porte-pièce.

De telles plaques supports présentant des ouvertures traversantes, elles permettent de retenir et séparer entre elles des pièces plates, constituant ainsi un porte-pièce. De telles plaques support permettent ainsi le traitement commun d'une série de pièces plates dans une machine de traitement, par exemple dans une machine de traitement simple face ou double face.

Les machines de traitement simple face ou double face permettent de réaliser différentes opérations de traitement de la surface plane d'une pièce, métallique ou non, visant notamment à rectifier la planéité, l'état de surface et/ou la côte de la pièce. On peut citer parmi ces techniques :
- le polissage, à savoir réaliser la diminution de la rugosité d'une surface,
- le rodage, à savoir la finition par abrasion d'une pièce afin qu'elle ait une surface unie et polie, et qu'elle ait une forme précise,
- le meulage, à savoir l'enlèvement de matière réalisé par un grand nombre de grains d'abrasifs, parfois agglomérés, qui jouent le rôle d'outil de coupe,
- la rectification, à savoir une opération d'usinage exécutée au moyen d'abrasifs fins, qui permet d'amener une pièce ou une partie de pièce à une cote précise dans une tolérance serrée et d'obtenir un excellent état de surface qui présentera un faible coefficient de frottement,
- la mise à l'épaisseur, ....

Ces machines de traitement sont notamment, de manière non exclusive, les machines de meulage ou rectification, de rodage et de polissage.

L'invention concerne donc le traitement de pièces notamment, mais de manière non limitée, le traitement dans une de ces machines de pièces métalliques, notamment des pièces en acier (inox ou non), alliages de cuivre, titane, alliages d'aluminium, carbures de tungstène, métaux précieux, mais également des pièces plates dans d'autres matériaux, et notamment en verre, cristaux, céramiques, composites, matériaux synthétiques, matières naturelles telles que des pierres naturelles.

De telles pièces sont par exemple des pièces plates pour l'horlogerie (pont, platine, rouage, pignons, cadran, came, index ...) ou des pièces plates pour le domaine automobile, le domaine aéronautique ou le domaine médical.

### Etat de la technique

Le document WO2019229585 décrit d'un ensemble de chargement de pièces à traiter dans une machine de traitement simple ou double face, utilisant un porte-pièce en forme de plaque pour le maintien d'au moins une pièce à traiter. Le porte-pièce délimite au moins une ouverture traversante formant une alvéole pour le logement d'au moins une pièce à traiter, et un film monté sur la première face du porte-pièce en regard de ladite ouverture traversante et permettant le maintien de ladite pièce à traiter dans ladite ouverture au moins pendant l'étape de chargement.

Ainsi, on utilise un film support temporaire, utilisé pour le maintien des pièces placées dans les fenêtres du porte-pièce pendant le chargement. Ce film disparait ensuite pendant le traitement des pièces, les pièces restant dans les alvéoles du porte pièces jusqu'à la fin du traitement. Le recours à ce film support, formant un fond temporaire pour les alvéoles du porte pièces, permet d'effectuer le placement des pièces dans le porte pièce en dehors de la machine de traitement, réduisant ainsi le temps de chargement des pièces dans la machine au simple placement du porte-pièce déjà rempli de pièces à traiter.

Il n'existe pas à ce jour d'équipement pour la pose d'un tel film sur un porte-pièce formé d'une plaque support présentant des ouvertures traversantes ou alvéoles. La pose d'un tel film, et notamment d'un film soluble, de préférence hydrosoluble ou bien liposoluble, est actuellement possible manuellement. Le recours à ce fond temporaire va notamment permettre de gagner du temps pour le chargement des pièces dans une machine de traitement, ce qui permet de réduire le temps d'immobilisation de la machine de traitement et ainsi de faire des économies. Cependant, lorsque l'opération de montage de chaque film sur un porte-pièce est une opération entièrement manuelle, elle engendre des coûts qui pourraient être réduits avec un équipement apte à simplifier l'opération et à réduire son temps d'implémentation.

### Bref résumé de l'invention

Un but de la présente invention est de proposer un équipement et un procédé de pose d'un film sur une plaque support qui facilitent et rendent plus fiable cette opération de pose du film.

Un autre but de l'invention est de fournir un équipement et un procédé de pose d'un film sur une plaque support qui permette une mise en oeuvre plus rapide de l'opération de pose du film qu'une procédure de pose entièrement manuelle.

Selon l'invention, ces buts sont atteints notamment au moyen d'un équipement pour la pose d'un film sur une plaque support présentant des ouvertures traversantes, ledit équipement comportant :
- un mandrin amont apte à servir d'axe pour une bobine d'alimentation portant un ruban continu dont une portion est apte à former un film destiné à recouvrir ladite plaque support,
- un mandrin aval apte à servir d'axe pour une bobine de récupération de la portion restante du ruban continu après séparation du film du ruban continu,
- une station d'assemblage disposée entre le mandrin amont et le mandrin aval, ladite station d'assemblage comprenant :
   * une base comportant un premier plateau,
   * un actionneur avec une partie mobile portant un deuxième plateau relié à l'extrémité libre de la partie mobile,

le deuxième plateau ou le premier plateau étant apte à recevoir une plaque support, dans lequel la partie mobile est apte à passer de manière réversible d'une première position, dans laquelle le deuxième plateau est distant du premier plateau, à une deuxième position, dans laquelle le deuxième plateau est en appui avec ledit premier plateau, et
dans lequel le deuxième plateau est apte à coopérer avec ledit premier plateau, dans ladite deuxième position de la partie mobile, pour former un outillage apte à mettre en contact ledit film et ladite plaque support lorsque la portion du ruban formant le film est située entre le deuxième plateau et le premier plateau, en regard de ladite plaque support.

Cette solution présente notamment l'avantage par rapport à l'art antérieur de permettre la pose plus précise et plus fiable du film sur chaque plaque support avec un gain de temps par rapport à une opération entièrement manuelle.

En effet, on comprend que le film arrive depuis la bobine d'alimentation placée sur le mandrin amont à l'emplacement située entre le premier plateau et le deuxième plateau. En parallèle, la plaque support est retenue sur la face libre du premier plateau ou du deuxième plateau. Le mouvement de l'actionneur permet de passer d'une première position du premier plateau dans laquelle le premier plateau est écarté du deuxième plateau, ce qui permet le placement du ruban avec la portion devant former le film en regard du premier plateau et le placement de la plaque support sur le premier plateau ou le deuxième plateau, à une deuxième position du premier plateau dans laquelle le film et la plaque support sont pris en sandwich entre le premier plateau et le deuxième plateau.

A cet effet, l'actionneur est proche de la base afin que l'agencement de la base et de l'actionneur permette la mise en contact entre le premier plateau et le deuxième plateau dans la deuxième position de la partie mobile de l'actionneur.

Ainsi, après montage du film sur la plaque support munie d'ouvertures traversantes, cette plaque support devant servir de support de pièces pendant le traitement de ces pièces, elle forme maintenant un porte-pièce en forme de plaque munie d'un fond pour chaque ouverture traversante qui délimite maintenant un alvéole pouvant loger une ou plusieurs pièce(s). On comprend que cet alvéole comporte le film à titre de fond, et que les parois latérales de cet alvéole correspondent à la portion de la plaque support bordant une ouverture traversante, l'autre côté de cet alvéole étant ouvert sur la face de la plaque support opposée à la face sur laquelle le film est fixé.

Le film est une portion du ruban supporté par la bobine d'alimentation, laquelle portion va former le fond temporaire de la plaque support formant porte-pièce, et également appelée satellite notamment dans le domaine de l'horlogerie. A cet effet, le film est une portion telle qu'elle recouvre en totalité ou en partie la plaque support. On comprend que le film recouvre au moins toutes les ouvertures traversantes, sur l'une des faces de la plaque support, pour former des alvéoles avec le film comme fond, ces alvéoles étant ouverts de l'autre côté débouchant sur la face de la plaque support non recouverte du film. Il est donc ainsi possible d'utiliser ensuite la plaque support recouverte du film comme support temporaire de pièces à traiter, logées une à une ou à plusieurs dans chaque alvéole. La préparation de ce support temporaire rempli de pièces à traiter pouvant s'effectuer à l'avance et en dehors de la machine de traitement, il suffit ensuite de mettre en attente ces supports temporaires remplis jusqu'au moment du traitement : le temps requis pour la pose dans la machine de traitement de chaque plaque support avec film et pièces à traiter étant ainsi beaucoup plus court que de placer, comme précédemment, dans la machine de traitement la plaque support puis une à une chaque pièce à traiter dans les ouvertures traversantes de la plaque support.

Selon une disposition, la base comporte un premier plateau délimitant une empreinte dont le contour présente une forme qui peut recouvrir au moins toutes les ouvertures traversantes de la plaque support. Ainsi, cette empreinte est une marque visuelle, éventuellement en relief (en creux ou en saillie), pour positionner le film sur le premier plateau et éventuellement contribuer à la délimitation et à la séparation du film depuis le ruban lors de la pose du film sur la plaque support. On garantit ainsi également que la forme et la taille du film permettront au film de recouvrir toutes les ouvertures traversantes de la plaque support et donc de servir de fond temporaire à toutes les ouvertures traversantes de la plaque support.

Selon une autre disposition, le deuxième plateau délimite une empreinte dont le contour est superposable au contour de l'empreinte du premier plateau, avec contact entre le contour de l'empreinte du deuxième plateau et le contour de l'empreinte du premier plateau dans ladite deuxième position de la partie mobile. Ainsi, on comprend que lors du contact entre le premier plateau et le deuxième plateau, le contour de l'empreinte du premier plateau venant en contact avec le contour de l'empreinte du deuxième plateau, ce contact va faciliter la coupe et la séparation du film depuis le ruban lors de la pose du film sur la plaque support.

Selon encore une disposition, le deuxième plateau est amovible et le premier plateau est amovible. Ainsi, on peut définir un ensemble de paires de premier et deuxième plateau (par exemple un plateau supérieur et un plateau inférieur), chaque paire étant adaptée à une taille et/ou une forme de plaque support. Dans le cas de la disposition précédente, chaque paire comporte un premier plateau et un deuxième plateau, le premier plateau définissant une empreinte avec un contour superposable au contour de l'empreinte du deuxième plateau, ledit contour ayant une taille et/ou une forme différente dans chaque paire.

La présente invention porte également sur un procédé de pose d'un film sur une plaque support présentant des ouvertures traversante, comportant les étapes suivantes :
- on fournit une plaque support formant un porte-pièce en forme de plaque,
- on fournit une bobine d'alimentation portant un ruban continu dont une portion est apte à former un film destiné à recouvrir ladite plaque support,
- on fournit équipement comportant :
   + un mandrin amont sur lequel on monte ladite bobine d'alimentation,
   + un mandrin aval sur lequel on monte une bobine de récupération apte à recevoir la portion restante du ruban continu après séparation du film du ruban continu,
   + une station d'assemblage disposée entre le mandrin amont et le mandrin aval, ladite station d'assemblage comprenant :
      * une base comportant un premier plateau,
      * un actionneur avec une partie mobile,
      * un deuxième plateau relié à l'extrémité libre de la partie mobile,

dans lequel la partie mobile est apte à passer de manière réversible d'une première position, dans laquelle le deuxième plateau est distant du premier plateau, à une deuxième position, dans laquelle le deuxième plateau est en appui avec ledit premier plateau, et
dans lequel le deuxième plateau est apte à coopérer avec ledit premier plateau, dans ladite deuxième position de la partie mobile, pour former un outillage apte à mettre en contact ledit film et ladite plaque support,
   - on place la partie mobile dans ladite première position,
   - on monte ladite plaque support sur le deuxième plateau ou le premier plateau,
   - on place le ruban continu de sorte que la portion du ruban formant le film est située entre le deuxième plateau et le premier plateau, (cette étape et la précédente peuvent être inversé quant à leur ordre de mise en oeuvre),
   - on place la partie mobile dans ladite deuxième position, ce par quoi la plaque support et le film viennent en contact l'un sur l'autre et on obtient une plaque support recouverte du film,
   - on place la partie mobile dans ladite première position et on libère la plaque support recouverte du film de ladite station d'assemblage.

Ensuite, on recommence les opérations, à partir de l'étape de placement de la partie mobile de l'actionneur dans la première position, puis on poursuit avec une nouvelle plaque support et l'avancée du ruban pour disposer d'un nouveau film en regard de la zone où se trouvera la face libre de la plaque support dans la deuxième position de la partie mobile de l'actionneur.

Ainsi, on obtient une procédure en partie mécanisée, voire entièrement mécanisée, certaines des étapes de ce procédé de pose du film pouvant rester manuelles avec d'autres étapes mécanisées, voire automatisées, ou bien toutes les étapes de ce procédé pouvant être automatisées.

Dans ce procédé de pose de film sur plaque support, on peut mettre en oeuvre l'une ou plusieurs des dispositions suivantes :
- avant de placer la portion du ruban formant le film entre le deuxième plateau et le premier plateau, on réalise une ligne discontinue de prédécoupes dans le ruban, ladite ligne discontinue épousant le contour dudit film selon une forme apte à recouvrir la plaque support;
- dans lequel ledit ruban continu comporte une première couche en un premier matériau hydrosoluble ou liposoluble recouvert d'une deuxième couche en un deuxième matériau non-adhérent sur lui-même et sur le premier matériau, ledit ruban étant disposé de sorte que le premier matériau est apte à faire face à la plaque support ;
- ledit équipement comprend en outre une unité d'humidification située à proximité de la station d'assemblage, et apte à humidifier la face du film en regard de la plaque de support, ou bien apte à humidifier la face libre de la plaque support lorsque ladite plaque support est montée sur le premier plateau ou sur le deuxième plateau et lorsque la partie mobile-est dans ladite première position ;
- ledit premier plateau comporte des passages débouchant sur sa face tournée vers le deuxième plateau, ledit équipement comprenant en outre un système de maintien par dépression de la position du film sur la plaque support, comportant une unité d'aspiration reliée auxdits passages du premier plateau, et, avant de placer la partie mobile dans ladite deuxième position, on active ladite unité d'aspiration, ce par quoi on maintient la position du film sur le premier plateau, et on maintient l'activation de ladite unité d'aspiration pendant que la partie mobile est dans ladite deuxième position ;
- ledit actionneur avec une partie mobile est un vérin avec un piston à mouvement linéaire, ladite partie mobile comprenant ledit piston, ledit vérin étant disposé en regard de la base, ledit vérin définissant un axe longitudinal sécant avec le premier plateau et disposé de manière orthogonale avec le premier plateau, dans lequel ledit deuxième plateau est relié à l'extrémité libre de la tige de piston.

### Brève description des figures

Des exemples de mise en oeuvre de l'invention, non limitatifs, sont indiqués dans la description illustrée par les figures annexées dans lesquelles :
- La figure 1 est une vue générale en perspective de l'équipement selon un premier mode de réalisation de l'invention,
- La figure 2 est une vue de face de l'équipement de la figure 1, avec le ruban en position opérationnelle permettant la pose du film,
- La figure 3 est une vue identique à celle de la figure 2, lors du montage de la plaque support, avec la partie mobile de l'actionneur dans la première position,
- La figure 4 est une vue partielle de l'équipement, montrant le montage de la plaque support,
- La figure 5 est une vue en perspective de la plaque support, avant la pose du film,
- La figure 6 est une vue identique à celle de la figure 2, avec la partie mobile de l'actionneur dans la deuxième position,
- La figure 7 est une vue en perspective de la plaque support, après la pose du film, depuis la face de la plaque support comportant le film, avec le film en semi-transparence,
- Les figures 8A à 8D montrent le principe du montage du film sur une variante de plaque support, pour former un ensemble de chargement vue depuis sa face avant (Fig. 8A, 8B et 8C) et depuis sa face arrière une fois le film posé (Fig. 8D), et
- La figure 9 est une vue de face de l'équipement selon un second mode de réalisation, lors du montage de la plaque support sur le premier plateau.

### Exemple(s) de mode de réalisation de l'invention

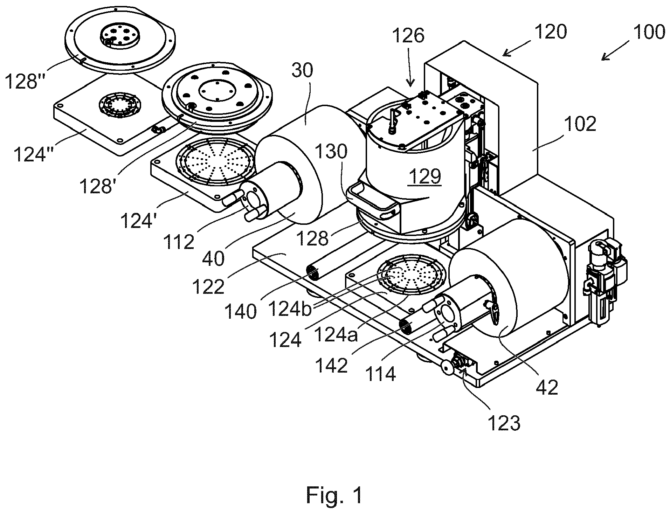

Un premier mode de réalisation de l'équipement 100 selon la présente invention est représentée sur les figures 1 à 4 et 6. Cet équipement 100 comporte une station d'assemblage 120 montée sur un bâti 102. Le bâti 102 porte un mandrin amont 112 et un mandrin aval 114. Le mandrin amont 112 porte une bobine d'alimentation 40 portant un ruban continu 30 enroulé sur lui-même. Le mandrin aval 114 porte une bobine de récupération 42 pouvant recevoir le ruban continu 30 après son passage dans la station d'assemblage 120, une fois que la portion du ruban 30 formant le film est montée sur la plaque support. Le mandrin amont 112 et le mandrin aval 114 sont placés de part et d'autre de la station d'assemblage 120, leur axe étant parallèle l'un avec l'autre, afin qu'après séparation du film du ruban continu, la portion restante du ruban continu puisse venir s'enrouler sur la bobine de récupération 42. Le mandrin amont 112 et le mandrin aval 114 peuvent être mis en rotation manuellement ou par des moyens de commande, tels qu'un moteur, activés manuellement ou automatiquement. Selon une variante non représentée, le mandrin amont 112 et le mandrin aval 114 ne sont pas montés sur le bâti 102, mais disposés séparément tout en faisant partie de l'équipement 100.

La station d'assemblage 120 est disposée entre le mandrin amont 112 et le mandrin aval 114. La station d'assemblage 120 comprend une base 122 sur laquelle est monté un premier plateau 124 : dans ce premier mode de réalisation, il s'agit d'un plateau inférieur 124 fixe et d'une base 122 fixe, ces deux éléments n'étant donc pas mobiles. La station d'assemblage 120 comprend un actionneur 126, en face de la base (au-dessus de la base 122 dans la version représentée), avec une partie mobile 129 à l'extrémité libre de laquelle est montée un deuxième plateau 128 formant un plateau supérieur.

Dans ce mode de réalisation, l'actionneur 126 est un vérin et la partie mobile 129 de l'actionneur 126 comprend un piston à mouvement linéaire. Ce vérin 126 est disposé en regard de la base 122, ledit vérin définissant un axe longitudinal (ici vertical) sécant avec le premier plateau 124 monté sur la base 122, cet axe étant disposé de manière orthogonale avec le premier plateau 124. Dans la configuration retenue sur les figures, cet axe passe par le centre de l'empreinte 124a du premier plateau 124, définie ci-après. En outre, le deuxième plateau 128 est monté sur l'extrémité libre de la tige de piston, et est démontable pour interchangeabilité avec un autre plateau 128' ou 128". L'actionneur 126 (ici le vérin) est par exemple actionné de manière pneumatique, d'autres types d'actionnement restant possibles.

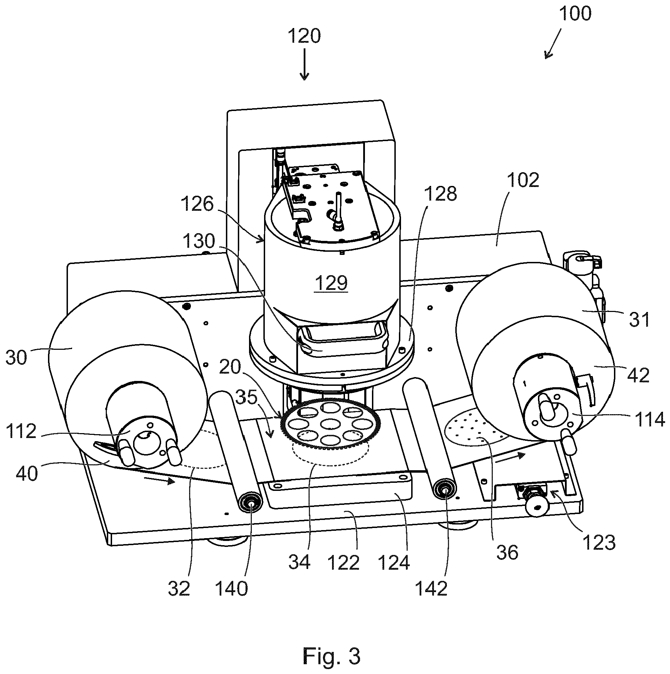

Selon une possibilité de mise en oeuvre du premier mode de réalisation représenté, le mouvement de montée et de descente de la partie mobile 129 (piston) de l'actionneur 126 (ici le vérin) est déclenché par un opérateur agissant sur une poignée 130. Selon une autre possibilité de mise en oeuvre du premier mode de réalisation représenté, le mouvement de descente de la partie mobile 129 (piston) de l'actionneur 126 (ici le vérin) est déclenché par un opérateur agissant sur une poignée 130 et le mouvement de remontée est actionné par un système motorisé. Selon une autre possibilité de mise en oeuvre du premier mode de réalisation représenté, le mouvement de remontée de la partie mobile 129 (piston) de l'actionneur 126 (ici le vérin) est déclenché par un opérateur agissant sur une poignée 130 et le mouvement de descente est actionné par un système motorisé. Selon une possibilité de mise en oeuvre du premier mode de réalisation représenté, le mouvement de descente de la partie mobile 129 (piston) de l'actionneur 126 (ici le vérin) est effectué en une seule séquence, et selon une autre possibilité, le mouvement de descente de la partie mobile 129 (piston) de l'actionneur 126 (ici le vérin) est effectué en deux séquences (en deux temps). En effet, selon une variante de réalisation, on peut réaliser la descente de la partie mobile 129 (piston) de l'actionneur 126 (ici le vérin) en deux temps afin de, en premier lieu, rapprocher l'un de l'autre le premier plateau 124 et le deuxième plateau 128, puis, en second lieu, les mettre en contact l'un avec l'autre. Ce contact peut s'effectuer avec une mise sous une pression d'au moins 1 bar, par exemple entre 1 bar et 5 bars, ou bien entre 1 bar et 10 bars, voire entre 1 bar et 20 bars, pendant une durée minimale, par exemple d'au moins 5 secondes, voire d'au moins 10 secondes, voire d'au moins 30 secondes. La valeur de la pression exercée entre le premier plateau 124 et le deuxième plateau 128 et la durée de cette mise en pression dépendent de la rapidité de fixation du film 34 sur la plaque support, et surtout de la résistance (fragilité) structurelle de la plaque support 20. Par exemple, notamment dans le cas de petites plaques supports, la partie mobile129 de l'actionneur 126 est agencée de sorte que lorsque le deuxième plateau 128 est en appui avec le premier plateau 124, le deuxième plateau 1128 exerce une pression d'au moins 1 bar, et notamment entre 1 et 5 bars au maximum. La première partie de la descente peut permettre de rapprocher suffisamment entre eux le premier plateau 124 et le deuxième plateau 128 pour permettre de maintenir la portion du ruban 30 destinée à former le film 34 dans la position correcte, voire de pouvoir encore remettre cette portion du ruban dans la position correcte alignée avec la plaque support 20. On voit sur la figure 3 que dans le cas d'une plaque support 20 et d'un film 34 tous les deux circulaires, la position correcte entre eux avant la découpe et fixation du film 34, correspond à une position concentrique entre la plaque support 20 et le film 34.

Ce premier plateau 124 et ce deuxième plateau 128 sont d'un premier modèle et sont appariés, formant entre eux une paire de plateaux qui coopèrent pour permettre le retrait et la séparation du film 34 du reste du ruban continu 30, puis la mise en contact du film sur la plaque support, comme il sera expliqué plus loin.

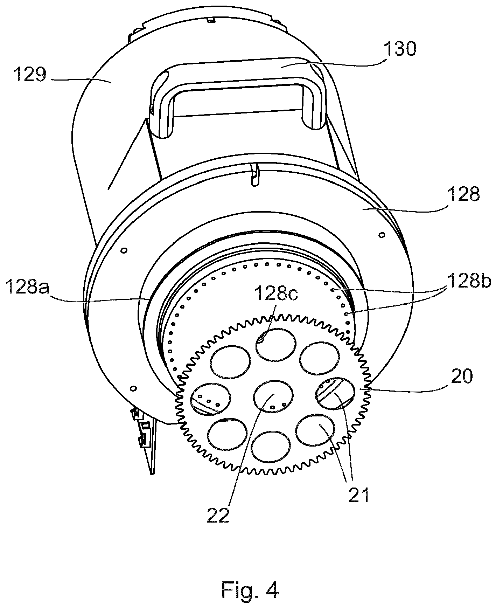

A cet effet, le premier plateau 124, comporte sur sa face libre une empreinte 124a circulaire (par exemple sous forme de ligne(s), de rainure(s) ou de nervure(s) ou de disque en retrait ou en saillie) dont le contour correspond au contour du film 34 à poser sur la plaque support, comme on peut le voir sur les figures 1 et 3. En parallèle, comme on peut le voir sur la figure 4, le deuxième plateau 128 comporte sur sa face libre une empreinte 128a également circulaire, de même taille que l'empreinte 124a du premier plateau 124, par exemple sous forme de rainure ou de nervure ou de disque en retrait ou en saillie. Sur les figures 1 et 4, on voit que l'empreinte 124a est formée de lignes concentriques formées de rainures et que l'empreinte 128a est formée d'une face circulaire dont le bord est superposable au contour de l'empreinte 124a. Dans cet exemple illustré, les empreintes 124a et 128a qui se correspondent (leur contour est superposable) sont circulaires mais d'autres formes sont possibles, notamment mais de manière non limitative une forme ovale, ovoïde, carrée, rectangulaire triangulaire, une autre forme polygonale.

Sur la figure 1, on voit à côté du bâti, deux autres paires de plateaux. En effet, dans ce mode de réalisation, le premier plateau 124 et le deuxième plateau 128 sont amovibles. Ainsi, on peut monter sur la base 122 l'un ou l'autre parmi les premiers plateaux 124, 124' et 124", et en parallèle on peut monter le deuxième plateau correspondant 128, 128' ou 128" sur l'extrémité inférieure du piston du vérin (ou plus généralement l'extrémité libre de la partie mobile 129 de l'actionneur 126). L'autre premier plateau 124' et l'autre deuxième plateau 128' sont d'un deuxième modèle et sont appariés, formant entre eux une seconde paire possible de plateaux pour l'équipement, ces deux plateaux 124' et 128' coopérant pour la pose d'un film un autre type de plaque support (non représenté) : ici l'empreinte du premier plateau 124' et du deuxième plateau 128' de cette seconde paire est plus grande que l'empreinte des plateaux 124 et 128 de la première paire. On utilise cette seconde paire pour un film plus grand à monter sur une plaque support plus grande que dans le cas de l'utilisation du premier modèle de paire de plaques 124 et 128. A gauche de la figure 1 sont représentés encore un autre premier plateau 124" et encore un autre deuxième plateau 128", tous les deux d'un troisième modèle et sont appariés, formant entre eux une troisième paire possible de plateaux pour l'équipement, ces deux plateaux 124" et 128" coopérant pour la pose d'un film un encore autre type de plaque support (non représenté) : ici l'empreinte du premier plateau 124" et du deuxième plateau 128" de cette troisième paire est plus petite que l'empreinte des plateaux 124 et 128 de la première paire. On utilise cette troisième paire pour un film plus petite à monter sur une plaque support plus petite que dans le cas de l'utilisation du premier modèle de paire de plaques 124 et 128.

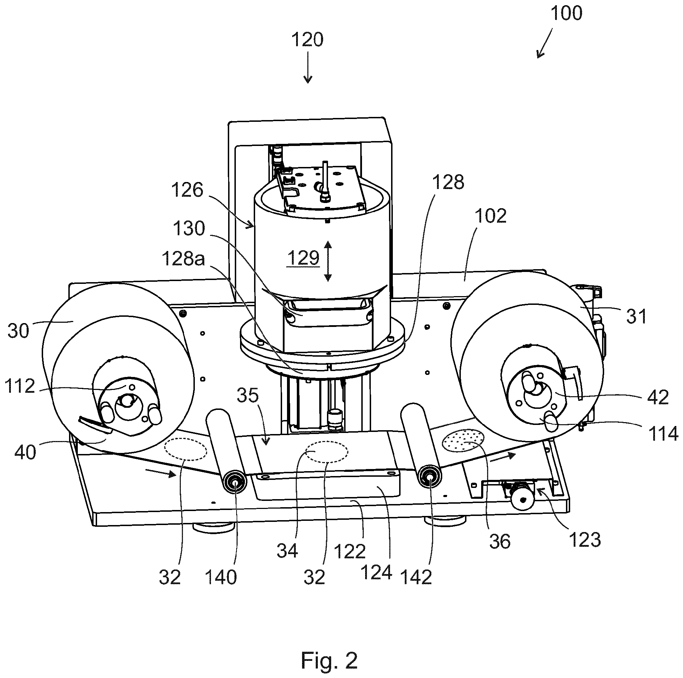

Comme on peut le voir sur les figures 1 à 3, 6 et 9, le mandrin amont 112 porte une bobine d'alimentation 40 portant un ruban continu 30 comprenant le film 34 destiné à venir se fixer sur la plaque support. 20. A cet effet, de préférence, ledit ruban 30 est pré-perforé selon au moins une ligne de prédécoupes 32 délimitant le contour du film 34. Selon une première possibilité, visible sur les figures 2, 3 et 6, le ruban 30 est muni de lignes de prédécoupes 32 réalisées à l'avance le long de tout le ruban continu 30 disposé sur la bobine d'alimentation 40. Selon, une deuxième possibilité, non représentée, la bobine d'alimentation 40 montée sur le mandrin amont 112 porte un ruban continu 30 sans ligne de prédécoupes 32 et l'équipement 100 comporte comprenant en outre une station de prédécoupage , disposée entre le mandrin amont 112 et la station d'assemblage 120, comprenant des moyens de coupe agencés pour permettre la réalisation d'une ligne discontinue de prédécoupes dans le ruban 30, ladite ligne discontinue de prédécoupes 32 épousant le contour dudit film 34 selon une forme apte à recouvrir la plaque support 30.

Dans les deux cas, l'écart le long du ruban entre deux lignes de prédécoupes 32 consécutives et les dimensions de cette ou de ces lignes de prédécoupes 32 sont adaptés au modèle de la paire de plateaux 124, 128 (124'+128' ; 124"+128", ou autre) et au modèle de plaque support 20 à traiter.

Le mandrin aval 114 porte une bobine de récupération 42 sur laquelle le reste du ruban continu 30, sans le film 34, formant un ruban sans film 31, est enroulé pour récupération. Le ruban 30 avançant de gauche à droite sur les figures 1 à 3, 6 et 9, la mise en rotation du mandrin aval 114 (à droite sur les figures 1 à 3, 6 et 9), manuelle ou par un mécanisme de mise en rotation, permet de faire avancer le ruban 30 entre deux opérations de pose d'un film 34 sur une plaque support 20.

Selon les matériaux respectifs utilisés pour la plaque support 20 et pour le film 34, ce film 34 est attaché sur la face de la plaque support 20 par collage, soudage, ou encore par électricité statique, adhérence moléculaire, capillarité.....

Selon une disposition, le ruban continu 30 comporte deux couches superposées : une première couche 35 en un premier matériau recouvert d'une deuxième couche 36 en un deuxième matériau. Le film 34 est constitué de la seule première couche 35, donc du seul premier matériau.

Le premier matériau est un matériau facilement dégradable par frottement ou par contact avec un liquide, en particulier un matériau soluble dans un liquide, il s'agit de préférence d'un matériau hydrosoluble ou liposoluble, tel qu'un plastique hydrosoluble ou liposoluble. Parmi les exemples de matériau hydrosoluble permettant de former le film, on peut noter l'acétate de polyvinyle (PVA) ou l'alcool de polyvinyle (PVAL), ou une autre résine hydrosoluble, ou un mélange de ces matières hydrosolubles.

La deuxième couche 36 sert de support et de protection à la première couche 35. Cette deuxième couche 36 est réalisée en un deuxième matériau non-adhérent sur lui-même et non-adhérent sur le premier matériau. Cette deuxième couche 36 sert de protection et de support à la première couche qui va seule contribuer à former le film. Au sein de l'équipement 100, le ruban 30 est disposé de sorte que le premier matériau (la première couche 35) est apte à faire face à la plaque support 20, y compris dans la deuxième position de la partie mobile 129 de l'actionneur 126. Comme on le voit sur les figures, on place le ruban continu 30de sorte que la portion du ruban qui va former le film 34 à poser sur la plaque support 20, est située entre le deuxième plateau 128 et le premier plateau 124 en regard de la plaque support 20, avec la première couche 35 de ladite portion du ruban 30 qui fait directement face à la plaque support 20. La deuxième couche 36 du ruban 30 va rester intégralement sur le tronçon 31 du ruban sans les films 34, lesdits films s'étant détachés du ruban 30 et restés un à un sur une plaque support 20, avec ce tronçon 31 et la deuxième couche venant sur la bobine de récupération 42.

Dans le cas du premier mode de réalisation, on place la plaque support 20 sur le deuxième plateau 128. Dans cette configuration, comme on peut le voir sur les figures 3 et 4, le deuxième plateau 128 formant un plateau supérieur, on doit retenir la plaque support 20 sous le deuxième plateau 128 avant et pendant la descente du deuxième plateau 128 et de la partie mobile 129 de l'actionneur 126 (piston du vérin), puis libérer la plaque support 20 du deuxième plateau 128 lors de l'appui entre le deuxième plateau 128 et le deuxième plateau 124, à savoir lors de la mise en contact entre la plaque support 20 et le film 34.

A cet effet, le deuxième plateau 128 comporte des passages 128b entre ses deux faces (voir les ouvertures sur la figure 4), et la station d'assemblage 120 comporte un système de retenue de la plaque support par dépression, comportant une unité d'aspiration (non visible sur les figures) reliée auxdits passages 128b, ledit système de retenue étant apte à permettre la tenue de la plaque support 20 sur le deuxième plateau 128 lorsque ladite unité d'aspiration est activée. Ce système de retenue de la plaque support 20 par dépression est suffisant pour retenir la plaque support 20 de faible masse, et il suffit de stopper l'aspiration par les passages 128b pour que la plaque support 20 soit libérée du deuxième plateau 128 est descende par gravité.

Pour faciliter le bon positionnement de la plaque support 20 sur le deuxième plateau 128, comme il apparaît visible sur la figure 4, la face libre (face inférieure) du deuxième plateau 128, comporte une goupille de centrage 128c qui coopère par complémentarité de forme avec un trou de centrage 22 disposé au centre de la plaque support 20.

Dans le cas de figure illustré du premier mode de réalisation, on utilise également une aspiration ou dépression pour maintenir en position la portion du ruban 30 formant le film 34 (disque prédécoupé selon la ligne de prédécoupes 32 de la première couche 35 sur les figures) contre l'empreinte 124a du premier plateau 124 (voir figures 1 et 3). A cet effet, le premier plateau 124 comporte des passages 124b entre ses deux faces. Ces passages 124b débouchent sur la face du premier plateau 124 tournée vers le deuxième plateau 128 (voir les ouvertures 124b sur la figure 1). L'équipement 100 comprend en outre un système de maintien par dépression de la position du film 34 sur la plaque support 20, comportant une unité d'aspiration 123 reliée auxdits passages 124b du premier plateau, ledit système de maintien apte à permettre la tenue de la position du film 30 sur le premier plateau 124 lorsque ladite unité d'aspiration 123 est activée. Afin de guider le ruban 30 dans la zone dans laquelle sera opérée la pose du film 34 sur la plaque support 20, en regard du premier plateau 124 (au-dessus du premier plateau 124 sur les figures), l'équipement 100 comporte deux rouleaux de guidage 140, 142, montés sur le bâti 102 dans les exemples illustrés. Ces deux rouleaux de guidage 140, 142 comportent un rouleau de guidage amont 140 disposé parallèlement au mandrin amont 112, entre le mandrin amont 112 et la base 122, et un rouleau de guidage aval 142 disposé parallèlement au mandrin aval 114, entre le mandrin aval 114 et la base 122.
comme on le voit sur les figures 1 à 3, 6 et 9, ces rouleaux de guidage 140, 142 sont situés de part et d'autres de la base 122/du premier plateau 124, pour contraindre le ruban 30 à passer au-dessus, et à proximité, de la face libre du premier plateau 124, la deuxième couche 36 étant en regard de ce premier plateau 124.

On prévoit par exemple que la génératrice située le plus bas des deux rouleaux de guidage 140, 142, est située en dessous du plan passant par la face libre (face supérieure) du premier plateau 124 (plateau inférieur) ou bien au-dessous et de préférence à moins de 1 centimètre dudit plan passant par la face libre (face supérieure) du premier plateau 124 (plateau inférieur).

On décrit maintenant la mise en oeuvre du procédé de pose du film sur la plaque support avec ce premier mode de réalisation de l'équipement 100 dans lequel le premier plateau 124 portant la plaque support 20, est fixe.

Etape 1 : on met en place la bobine d'alimentation 40 portant le ruban 30 sur le mandrin amont 112 et on met la bobine de récupération 42 vide, sur le mandrin aval 114. Puis on fait avancer le ruban 30 en permettant la rotation des mandrins amont 112 et aval 114, de sorte que la portion formant le film 34 soit bien placée, en regard du premier plateau 124 monté sur la base 122 : c'est le centrage du film 34 prédécoupé dans le ruban 30 par rapport à l'empreinte 124a du premier plateau 124 (voir les flèches montrant l'avancée du ruban 30 sur la figure 2) ;

Etape 2 : on active l'unité d'aspiration 123, la mise en dépression des passages 124b traversant le premier plateau 124 attirant le ruban 30 contre le premier plateau 124, ce qui maintient en place le bon positionnement du ruban sur l'empreinte 124a du premier plateau 124. Dans cet agencement, la première couche 35 du ruban 30 est tournée vers le haut, en direction du deuxième plateau 128 ou plateau supérieur, et c'est la deuxième couche 36 du ruban qui est maintenue en contact contre la face supérieure du premier plateau 124. C'est la stabilisation de la portion du ruban 30 portant le film 34 (voir la figure 2). Ainsi, la première couche 35 du ruban 30 fait directement face à la plaque support 20;

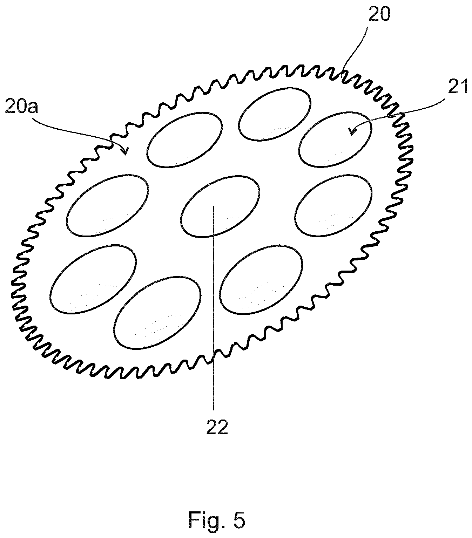

Etape 3 : on humidifie, à savoir on mouille par apport de liquide, et en particulier par un spray d'eau, toute la première face 20a de la plaque support 20 à couvrir (voir figure 5) : cette étape d'humidification peut s'effectuer alors que la plaque support 20 est déjà montée sur le deuxième plateau 128 ou préalablement à ce montage,

Etape 4 :on positionne la plaque support 20 sur le deuxième plateau 128, avec sa deuxième face 20b orientée en regard du deuxième plateau 128, en plaçant le trou de centrage 22 de la plaque support sur la goupille de centrage 128c du deuxième plateau 128 (voir figures 3 et 4). La plaque support 20 est alors logée de façon centrée sur l'empreinte circulaire 128a du deuxième plateau 128. En parallèle, on active le système de retenue de la plaque support 20 en actionnant le fonctionnement de l'unité d'aspiration reliée aux passages 128b du deuxième plateau 128, ce qui permet la tenue de la plaque support sous le deuxième plateau 128 ;

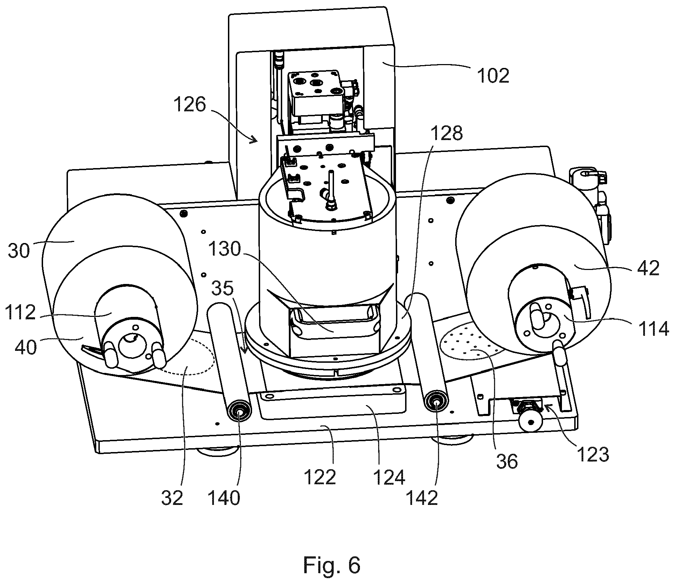

Etape 5 : on fait descendre la partie mobile de l'actionneur, à savoir dans ce cas le piston 129 du vérin 126, par exemple en abaissant la poignée 130, et ce jusqu'au contact entre le premier plateau 124 et le deuxième plateau 128 (figure 6). Selon une possibilité (voir la figure 4), le plateau 128 comporte une couronne extérieure entourant une portion centrale délimitée par l'empreinte 128a et la descente du piston et du deuxième plateau s'effectue en deux temps : dans un premier temps tout le plateau 128 descend avec le piston 129 jusqu'au moment où cela permet de retenir le ruban 30, puis dans un deuxième temps la couronne extérieure restant immobile, seule la portion centrale du deuxième plateau 128 descend jusqu'au contact avec le premier plateau 124;

Etape 6 : on désactive le système de retenue de la plaque support 20 en stoppant le fonctionnement de l'unité d'aspiration reliée aux passages 128b du deuxième plateau 128, ce qui permet la libération de la plaque support 20 du deuxième plateau 128, la plaque support étant posée contre le film 34 les deux positionnés de manière centrée (concentrique sur les figures) l'un par rapport à l'autre. Par exemple, on détecte l'arrivée du deuxième plateau 128 dans sa position basse par détection d'un contact entre deux autres éléments.

Etape 7 : on maintient via le vérin 126 une pression de l'ordre de quelques bars entre le deuxième plateau 128 et le premier plateau 124, et ce pendant un temps de l'ordre de quelques secondes. Pendant ce temps, s'effectue l'adhésion du film 34 sur la première face 20a de la plaque support 20 par contact entre le liquide présent sur cette première face 20a de la plaque support 20 et le film 34;

Etape 8 : on fait remonter la partie mobile de l'actionneur, à savoir dans ce cas le piston 129 du vérin 126, par exemple en activant la remontée soit de manière automatique soit manuellement par la poignée 130. Cette étape de remontée peut s'effectuer en une séquence continue (une seule étape) ou bien en deux temps. Au début de cette étape, le film 34 est collé sur la plaque support 20, et n'est plus relié au reste du ruban 31 dont il s'est détaché, tout en étant toujours positionné contre (ici au-dessus de) la deuxième couche 36. A la fin de cette étape, le deuxième plateau 128 est dans sa deuxième position haute, et le ruban 30 ne comporte plus que la deuxième couche 36 dans la portion qui a servi à former le film 34;

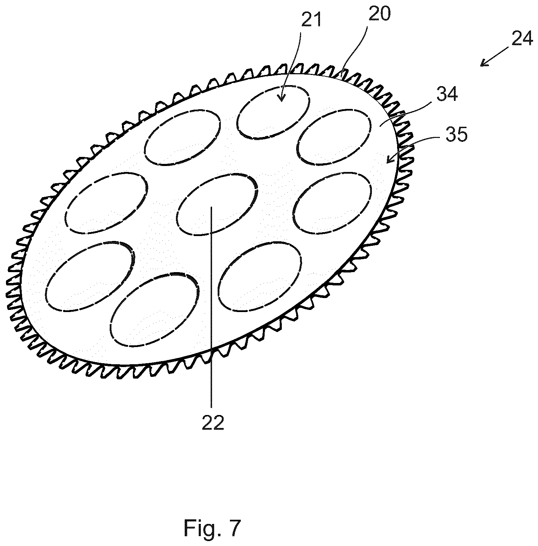

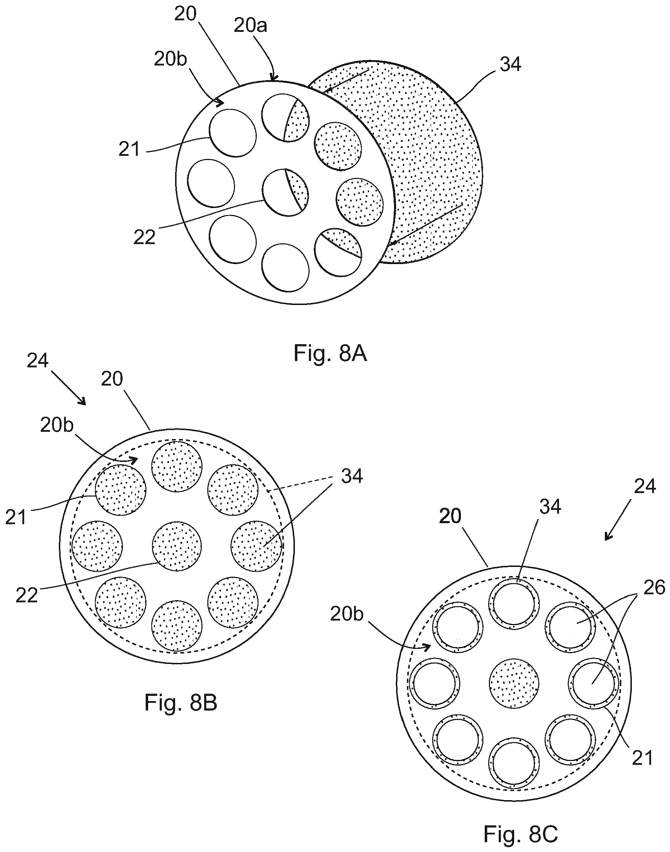

Etape 9 : on effectue le déchargement de la plaque support 20 revêtue du film 34, formant un ensemble de chargement 24 pour des pièces à traiter 26 (figures 7 et 8c).

L'arrêt de l'unité d'aspiration 123 relié au premier plateau 124 s'effectue pendant l'étape 7 ou pendant l'étape 8, tant que l'unité d'aspiration 123 est activée, la portion de la deuxième couche 36 du ruban 30 qui faisait face au film 34 restant plaquée contre le premier plateau 124 et facilitant ainsi la séparation puis le retrait du film 34 du ruban 30. Cela se déroule sous forme de la séparation d'une portion de la première couche 35 de la deuxième couche 36, le long de la ligne de prédécoupe 32 .

On peut sortir de l'équipement 100 manuellement la plaque support recouverte du film 24, ou bien de manière automatique. Dans ce dernier cas, par exemple, l'équipement 100 comprend en outre une unité de déchargement (non représentée) apte à sortir ladite plaque support 20 recouverte du film 34 (formant un ensemble de chargement 24) en dehors de ladite station d'assemblage 120 lorsque la partie mobile 129 de l'actionneur 126 (tige de piston du vérin) est revenue dans la première position (relevée).

De la même façon, on peut placer la plaque support 20 dans la station d'assemblage 120 manuellement ou bien de manière automatique. Dans ce dernier cas, par exemple, l'équipement 100 comprend en outre une unité de chargement (non représentée) apte à amener une plaque support 20 dans ladite station d'assemblage 120 sur le deuxième plateau 128 (plateau supérieur pour le premier mode de réalisation) ou sur le premier plateau 124 (plateau inférieur pour le deuxième mode de réalisation), lorsque la partie mobile 129 de l'actionneur 126 (tige de piston du vérin) est dans la première position (relevée) (et avec la partie mobile 125 de l'actionneur dans une position de repos, rétractée pour le deuxième mode de réalisation).

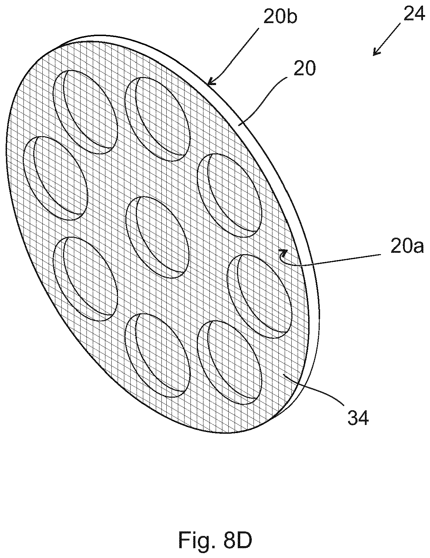

La plaque support 20 est un porte-pièce dont les ouvertures traversantes 21 forment des alvéoles aptes à retenir une ou plusieurs pièces 26. Cette plaque support est par exemple un satellite, utilisé notamment pour le polissage des pièces plates 26 dans le domaine de l'horlogerie. Les ouvertures traversantes 21 peuvent présenter de multiples formes et tailles, y compris sur la même plaque support 20 : Sur les figures ces ouvertures traversantes 21 sont circulaires mais ces ouvertures traversantes 21 peuvent être de forme oblongue, ovale, carrée, rectangulaire, ou de tout autre polygone régulier ou non régulier, en forme de demi-cercle, de portion de cercle, de lune, etc ....Ainsi, grâce au procédé selon l'invention, le film 34 est positionné en regard de la première face 20a de la plaque support 20, puis est posé (figure 8A) sur cette première face 20a et enfin fixé sur cette première face 20a. on obtient ainsi (figures 8B et 8D) un ensemble de chargement 24 formé de la plaque support 20 recouverte du film 34 qui forme alors un fond pour chaque ouverture traversante 21 délimitant un alvéole qui reçoit ensuite une pièce à traiter 26 placée dans l'alvéole depuis la deuxième face 20b de la plaque support 20 (figure 8C).

Les pièces à traiter 26 sont placées individuellement dans les alvéoles manuellement ou par un module dédié. Selon une possibilité de mise en oeuvre, on prévoit une machine de chargement de pièces (non représentée) comprenant l'équipement 100 précédemment décrit, un poste de réception de pièces à traiter 26 et un poste de réception de plaques-supports 20 recouvertes dudit film 34 (ensembles de chargement 24). Ces deux postes forment une unité aval par rapport à l'équipement 100 et permettent la pose manuelle ou mécanisée des pièces 26 dans les alvéoles de la plaque support. Dans ce dernier cas, selon une possibilité de mise en oeuvre, la machine de chargement de pièces comprend en outre un poste de chargement de pièces à traiter apte à prélever une plaque-support recouverte dudit film 24 dans le poste de réception de plaques-supports recouvertes dudit film 24, à prélever une pièce à traiter 26 dans le poste de réception de pièces à traiter et à placer ladite pièce à traiter 26 dans une ouverture 21 de ladite plaque support 24 recouverte dudit film 34. On dispose ainsi d'une machine de chargement de pièces fonctionnant en automatique pour placer les pièces 26 sur la plaque-support recouverte dudit film 24.

L'humidification de la plaque support 20 ou du film 34 est effectuée par exemple par pulvérisation d'un jet de liquide en fines gouttelettes, ce spray de liquide, par exemple de l'eau, pouvant être réalisé par un opérateur ou bien par un module dédié. Dans ce dernier cas, l'équipement 100 comprend une unité de pulvérisation de liquide (non représentée), notamment une unité d'humidification, située à proximité de la station d'assemblage 120, et apte à humidifier la face du film 34 dans la portion délimitée par la ligne de prédécoupes 32 (cette portion étant déjà placée ou non en regard de la plaque de support 20) ou bien apte à humidifier la face libre de la plaque support 20 (première face 20a). Pour l'humidification de la plaque support, cela peut se faire lorsque ladite plaque support 20 est montée sur le premier plateau 124 ou sur le deuxième plateau 128, ou bien en amont, à savoir avant le montage de ladite plaque support 20 sur le premier plateau 124 ou sur le deuxième plateau 128, par exemple lorsqu'une série de plaques supports 20 est disposée sur un poste d'alimentation en plaques supports (non représenté).

Selon une disposition possible, mais non représentée, l'équipement 100 comprend en outre une unité de contrôle par vision, comprenant un système de prise de vue et un système de traitement et d'analyse d'images, l'unité de contrôle par vision étant apte à prendre des vues (images) de la zone du premier plateau 124 et/ou du deuxième plateau 128.

Par exemple, une telle unité de contrôle par vision mise en oeuvre dans le cas du premier mode de réalisation tel que représenté sur les figures, permet de prendre des vues orientées en direction de la face supérieure du premier plateau 124 formant un plateau inférieur, et ce que ce premier plateau 124 soit non recouvert, ou que ce premier plateau 124 soit recouvert de la plaque support 20 (ce sont alors des vues de la face supérieure de la plaque support 20), mais également lorsque le ruban 30 passe au-dessus de la plaque support 20 (ce sont alors des vues du dessus du ruban 30 et d'une portion de la plaque support ou seulement des vues du dessus du ruban surmontant la plaque support 20 si le ruban 30 recouvre toute la plaque support 20 et que l'on ne voit plus cette plaque support 20).

Les images prises par l'unité de contrôle par vision peuvent servir à repérer la position des empreintes 124a du premier plateau 124 et à repérer la position de la ligne de prédécoupe 32 du ruban afin de les faire correspondre (de manière concentrique si elles sont circulaire, et/ou de les faire coïncider, notamment si elle sont superposables).

Ce système de prise de vue apte à prendre des vues correspond à un système optique, en particulier un système optique centré, comprenant un ensemble de composants optiques et un système d'acquisition d'images. Un tel système d'acquisition d'images permet de prendre des photographies et/ou des vidéos, et se présente par exemple sous la forme d'une caméra ou d'un appareil photographique, notamment un appareil photographique numérique.

Cette unité de contrôle par vision est de préférence apte à piloter la position de et/ou d'activer/désactiver un ou plusieurs éléments de l'équipement 100, par exemple pour mettre en position le ruban 30 et le film 34 par rapport à la position de la plaque support 20 qui doit recevoir le film 34, et ce via par exemple la mise en rotation du mandrin amont 112, ou encore pour commander les éléments de l'équipement 100 permettant la découpe et la pose du film 34, notamment l'actionneur 126 (et l'actionneur 125 pour le deuxième mode de réalisation).

Ainsi, cette unité de contrôle par vision peut être apte à mettre en mouvement et à stopper le mouvement de rotation du mandrin aval 114, pour permettre l'avancée du tronçon aval du ruban 31 qui n'a plus le film 34, et placer un nouveau tronçon du ruban 30 présentant une ligne de prédécoupes 32 sur le premier plateau 124 (ou le deuxième plateau 128 pour le deuxième mode de réalisation).

Cette unité de contrôle par vision peut être apte à commander le mouvement de la partie mobile 129 de l'actionneur, depuis la première position vers la deuxième position et inversement.

Cette unité de contrôle par vision peut également être apte à commander l'un ou l'autre ou plusieurs des éléments suivants précédemment décrits : unité de chargement, unité de déchargement, unité d'aspiration reliée au premier plateau 124, unité d'aspiration reliée au deuxième plateau 128.

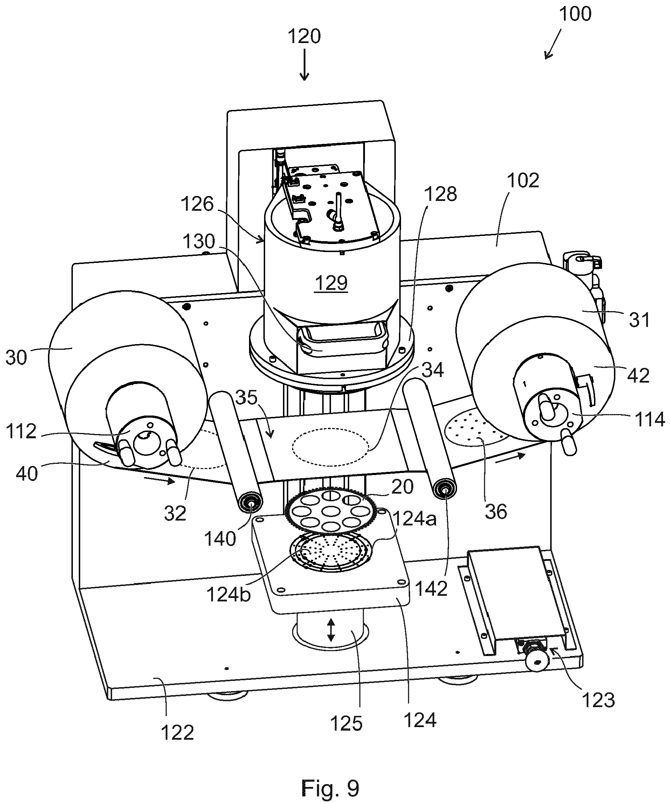

On se reporte maintenant à la figure 9 représentant un deuxième mode de l'invention : la base 122 est davantage écartée verticalement des mandrins amont 112 et aval 114 que dans le cas du premier mode de réalisation. Ainsi, il est possible de faire monter et descendre le premier plateau 124 qui va porter la plaque support 20. Sur la figure 9, le premier plateau 124 est représenté dans une position intermédiaire, entre une position basse ou première position, vers une position haute ou deuxième position. Un actionneur, tel qu'un vérin linéaire, permet ce mouvement vertical du premier plateau, la partie mobile 125 de cet actionneur portant à son extrémité libre, supérieure, le premier plateau 124. La plaque support 20 est dans ce cas posée par gravité sur la face supérieure du premier plateau 124.

Dans le cas du deuxième mode de réalisation, les dispositions précédemment décrites en relation avec le premier mode de réalisation restent valables sauf sur les points qui suivent :
- la plaque support 20 est montée sur le premier plateau 124, ou plateau inférieur, et se trouve au-dessous du ruban 30 et du film 34,
- la base 122 qui porte le premier plateau 124, ou plateau inférieur, n'est pas fixe mais mobile, d'une position basse ou première position, écartée de la zone de passage du ruban 30, vers une position haute ou deuxième position, proche de la zone de passage du ruban 30, avec dans cette deuxième position, la face supérieure du premier plateau 124 qui reste dessous mais très proche voire en contact avec la portion du ruban formant le film 34,
- le ruban 30 est disposé de sorte que la première couche 35 du premier matériau est tournée en regard de la base et du premier plateau 124,
- le deuxième plateau 128 ne portant pas la plaque support 20, il n'est pas nécessairement muni de passages 128b reliés à une unité d'aspiration et la station d'assemblage 120 ne comporte plus nécessairement de système de retenue de plaque.D'une manière plus générale, selon le deuxième mode de réalisation de l'invention dans lequel la plaque support 20 est montée sur le premier plateau 124, ledit premier plateau 124 est apte à recevoir la plaque support 20, et la base 122 est mobile entre une position de retrait ou première position, dans laquelle le premier plateau 124 est distant de plus de 2 centimètres de la zone de passage du tronçon du ruban 30 situé entre le mandrin amont 112 et le mandrin aval 114, et une position opérationnelle ou deuxième position dans laquelle le premier plateau 124 est distant de moins de 1 centimètre de ladite zone de passage. Ainsi, dans la position de retrait, l'écart entre le ruban 30 et le premier plateau 124 garantit un écart suffisant entre la plaque support 20 et le ruban 30 pour permettre l'avancée du ruban 30 jusqu'à la position dans laquelle le film 34 est en regard de la plaque support, et aussi permet l'humidification de la plaque support 20 posée sur le premier plateau 124. La position opérationnelle permet une proximité, voire un contact entre le film 34 et la face supérieure de la plaque support 20, et ce avant le mouvement de la base 122 (par exemple en montée) en direction du deuxième plateau 128, ce par quoi le premier plateau 124 et le deuxième plateau 128 rentrent en contact.

Dans ce deuxième mode de réalisation, on envisage deux variantes :
- le cas de la base mobile 122, portant le premier plateau 124 (plateau inférieur), avec un deuxième plateau 128 monté sur un support fixe : il faut alors considérer que la base 122 comporte une partie mobile, celle de l'actionneur de l'équipement 100, et que le support du deuxième plateau 128 (plateau supérieur) est la base fixe de l'équipement 100 (pas de mouvement possible des éléments 126 et 129 de la figure 9) ;
   et
- le cas de la base 122 avec une partie mobile 125 (portant le premier plateau 124) et en conservant un actionneur 126 avec une partie mobile 129 qui porte le deuxième plateau 128.

Dans la présente invention, avec un ruban 30 formé d'une première couche 35 en un premier matériau, superposée à une deuxième couche 35 en un deuxième matériau, ce ruban 30 est disposé de sorte que le premier matériau (la première couche 35) est apte à faire face à la plaque support 20. Cela signifie que lorsque le ruban 30 s'étend entre la bobine d'alimentation 40 et la bobine de récupération 42, le premier matériau (la première couche 35) de la portion du ruban 30 destinée à former le film 34, fait face au plateau parmi le premier plateau 128 et le deuxième plateau 124 qui reçoit ou est destiné à recevoir la plaque support 20 sur laquelle on veut monter le film 34.

Concernant le procédé de pose du film 34 sur la plaque support 20, il est analogue à celui qui a précédemment été décrite en relation avec le premier mode de réalisation, hormis les points suivants :
- Etape 1 : inchangée, hormis que dans le cas d'un ruban 30 comportant deux couches 35 et 36, la première couche 35 avec la matière destinée à forme le film 34 n'est pas tournée vers le haut, face au deuxième plateau 128 comme dans le cas du premier mode de réalisation, mais cette première couche est tournées vers le bas en direction du premier plateau 124,;
- Etape 2 : n'est pas mise en oeuvre ou bien on utilise une position basse du deuxième plateau 128 avec activation de la mise en dépression par les passages 128a ce qui maintient en place le bon positionnement du ruban 30 sur l'empreinte 128a du deuxième plateau 128 ;
- Etape 3 : inchangée hormis que si la plaque support 20 est montée, elle est montée sur le premier plateau 124;
- Etape 4 : on positionne la plaque support 20 sur le premier plateau 124 alors dans sa position basse ou première position, avec sa deuxième face 20b orientée en regard du premier plateau 124, en plaçant le trou de centrage 22 de la plaque support 20 sur une goupille de centrage du premier plateau 124 (non représentée) ;
- Etape 5 : on fait monter la partie mobile 125 de l'actionneur disposée dans la base 122 jusqu'au moment où la plaque support 20 rentre en contact avec le film 34, le premier plateau 124 et le deuxième plateau 128 étant en appui avec pression entre eux ;
- Etape 6 : pas applicable ;
- Etape 7 : inchangée ;
- Etape 8 : A ce moment, le film 34 est collé sur la plaque support 20, et n'est plus relié au reste du ruban 31 dont il s'est détaché, tout en étant toujours positionné contre (ici au-dessous de) la deuxième couche 36. on fait descendre la partie mobile de l'actionneur 125 jusque dans la première position de la première plaque 124:
- Etape 9 : identique.

Les exemples illustrés sur les figures et décrits portent sur un équipement avec un mouvement vertical d'aller et retour du piston d'un vérin, lequel piston forme la partie mobile de l'actionneur mentionné dans la conception la plus large de la présente invention. Dans ces exemples, le premier plateau est un plateau inférieur et le deuxième plateau est un plateau supérieur, de sorte que dans la première position le deuxième plateau est relevé par rapport au premier plateau et dans la deuxième position le deuxième plateau est abaissé par rapport au premier plateau. En particulier, dans ces exemples illustrés, le deuxième plateau 128 est disposé au-dessus du premier plateau 124 et forme un plateau supérieur. Également, dans les exemples illustrés, l'actionneur 126 est disposé au-dessus de la base 122, avec l'axe de l'actionneur 126 orthogonal à la face supérieure du premier plateau 124 : en particulier, l'actionneur 126 est un vérin avec un piston à mouvement linéaire, disposé au-dessus de la base 122, ledit vérin définissant un axe longitudinal sécant avec le premier plateau 124 et disposé de manière orthogonale avec le premier plateau 124. D'autres agencement géométriques ou d'autres types de mouvement restent possible dans le cadre de la présente invention. Notamment, on peut envisager un mouvement horizontal d'aller et retour du piston du vérin (ou plus généralement de la partie mobile de l'actionneur), le premier plateau et le deuxième plateau venant alors en contact par leurs faces en regard qui sont alors orientées verticalement. On peut également envisager un mouvement incliné d'aller et retour du piston du vérin (ou plus généralement de la partie mobile de l'actionneur), le premier plateau et le deuxième plateau venant alors en contact par leurs faces en regard qui sont alors orientées de manière inclinée, mais toujours parallèles entre elles.

On peut également envisager que la partie mobile de l'actionneur est un bras pivotant autour d'un axe horizontal avec à son extrémité un outillage portant la plaque support, ce bras passant d'une position haute, relevée, avec la face libre de la plaque support tournée vers l'avant, à une position basse, abaissée, la face libre de la plaque support tournée vers le bas et horizontale, venant se coller au film.

Les exemples illustrés sur les figures et décrits portent sur un équipement avec un vérin pneumatique à titre d'actionneur : d'autres types de vérins ou d'actionneurs sont possibles dans le cadre de la présente invention, tels que des actionneurs mécaniques, électriques, électromagnétiques, hydrauliques, etc ...

De même, les exemples illustrés sur les figures et décrits portent sur un équipement avec un vérin à mouvement linéaire : d'autres types de vérins ou d'actionneurs sont possibles dans le cadre de la présente invention, tels que des actionneurs rotatifs, pendulaires, etc

La présente demande de brevet n'est pas limitée au domaine des machines de traitement simple face ou double face, mais l'équipement et le procédé de pose de film sur un support en forme de plaque peut être utilisé également dans d'autres domaines, notamment le stockage intermédiaire ou le pré-positionnement de composants de tous types en vue d'opérations ultérieures....

### Signes de référence employés sur les figures

- 20: Plaque support
- 20a: Première face de la plaque support
- 20b: Deuxième face de la plaque support
- 21: Ouvertures traversantes
- 22: Trou de centrage
- 24: Plaque support avec film = ensemble de chargement
- 26: Pièce à traiter
- 30: Ruban continu
- 31: Ruban sans le film
- 32: Ligne de prédécoupes
- 34: Film
- 35: Première couche
- 36: Deuxième couche
- 40: Bobine d'alimentation
- 42: Bobine de récupération
- 100: Equipement
- 102: bâti
- 112: Mandrin amont
- 114: Mandrin aval
- 120: Station d'assemblage
- 122: Base
- 123: Unité d'aspiration
- 124: Premier plateau (plateau inférieur-modèle 1)
- 124a: Empreinte
- 124b: Passages
- 124': Premier plateau (plateau inférieur-modèle 2)
- 124": Premier plateau (plateau inférieur-modèle 3)
- 125: Actionneur
- 126: Actionneur (vérin)
- 128: Deuxième plateau (plateau supérieur modèle 1)
- 128a: Empreinte
- 128b: Passages
- 128c: Goupille de centrage
- 128': Deuxième plateau (plateau inférieur-modèle 2)
- 128": Deuxième plateau (plateau inférieur-modèle 3)
- 129: Partie mobile de l'actionneur (piston du vérin)
- 130: Poignée
- 140: Rouleau de guidage amont
- 142: Rouleau de guidage aval

## Revendications

1. Equipement (100) pour la pose d'un film (34) sur une plaque support (20) présentant des ouvertures traversantes (21), ledit équipement comportant :
- un mandrin amont (112) apte à servir d'axe pour une bobine d'alimentation (40) portant un ruban continu dont une portion est apte à former un film (34) destiné à recouvrir ladite plaque support (20),
- un mandrin aval (114) apte à servir d'axe pour une bobine de récupération (42) de la portion restante (31) du ruban continu (30) après séparation du film (34) du ruban (30) continu,
- une station d'assemblage (120) disposée entre le mandrin amont (112) et le mandrin aval (114), ladite station d'assemblage (120) comprenant :
* une base (122) comportant un premier plateau (124),
* un actionneur (126) avec une partie mobile (129) portant un deuxième plateau (128) relié à l'extrémité libre de la partie mobile (129),
le deuxième plateau (128) ou le premier plateau (124) étant apte à recevoir une plaque support (20),
dans lequel la partie mobile (129) est apte à passer de manière réversible d'une première position, dans laquelle le deuxième plateau (128) est distant du premier plateau (124), à une deuxième position, dans laquelle le deuxième plateau (128) est en appui avec ledit premier plateau (124), et
dans lequel le deuxième plateau (128) est apte à coopérer avec ledit premier plateau (124), dans ladite deuxième position de la partie mobile (129), pour former un outillage apte à mettre en contact ledit film (34) et ladite plaque support (20) lorsque la portion du ruban (30) formant le film (34) est située entre le deuxième plateau (128) et le premier plateau (124), en regard de ladite plaque support (20).

2. Equipement (100) selon la revendication 1, dans lequel la base (122) comporte un premier plateau (124) délimitant une empreinte (124a) dont le contour présente une forme qui peut recouvrir au moins toutes les ouvertures traversantes (21) de la plaque support (20).

3. Equipement (100) selon la revendication 1 ou 2, dans lequel ledit deuxième plateau (128) est amovible et dans lequel ledit premier plateau (124) est amovible.

4. Equipement (100) selon la revendication 2 ou 3, dans lequel ledit deuxième plateau (128) délimite une empreinte (128a) dont le contour est superposable au contour de l'empreinte (124a) du premier plateau (124), avec contact entre le contour de l'empreinte (128a) du deuxième plateau (128) et le contour de l'empreinte (124a) du premier plateau (124) dans ladite deuxième position de la partie mobile (129).

5. Equipement (100) selon l'une des revendications 1 à 4, dans lequel ledit actionneur (126) avec une partie mobile (129) est un vérin avec un piston à mouvement linéaire, ladite partie mobile (129) comprenant ledit piston, ledit vérin étant disposé en regard de la base (122), ledit vérin définissant un axe longitudinal sécant avec le premier plateau (124) et disposé de manière orthogonale avec le premier plateau (124), dans lequel ledit deuxième plateau (128) est relié à l'extrémité libre de la tige de piston.

6. Equipement (100) selon l'une des revendications 1 à 5, dans lequel ledit mandrin amont (112) porte une bobine d'alimentation (40) portant un ruban (30) continu, ledit ruban (30) étant pré-perforé selon au moins une ligne de prédécoupes (32) délimitant le contour du film (34).

7. Equipement (100) selon l'une des revendications 1 à 6, dans lequel ledit ruban (30) continu comporte une première couche en un premier matériau hydrosoluble ou liposoluble recouvert d'une deuxième couche en un deuxième matériau non-adhérent sur lui-même ou sur le premier matériau, ledit ruban (30) étant disposé de sorte que le premier matériau est apte à faire face à la plaque support (20).

8. Equipement (100) selon l'une des revendications 1 à 7, dans lequel le deuxième plateau (128) comporte des passages entre ses deux faces, et la station d'assemblage (120) comporte un système de retenue de la plaque support (20) par dépression, comportant une unité d'aspiration (123) reliée auxdits passages, ledit système de retenue étant apte à permettre la tenue de la plaque support (20) sur le deuxième plateau (128) lorsque ladite unité d'aspiration est activée.

9. Equipement (100) selon l'une des revendications 1 à 7, dans lequel ledit premier plateau (124) est apte à recevoir la plaque support (20)
et dans lequel la base (122) est mobile entre une position de retrait dans laquelle le premier plateau (124) est distant de plus de 2 centimètres de la zone de passage du tronçon du ruban (30) situé entre le mandrin amont (112) et le mandrin aval (114), et une position opérationnelle dans laquelle le premier plateau (124) est distant de moins de 1 centimètre de ladite zone de passage.

10. Equipement (100) selon l'une des revendications 1 à 9, dans lequel le deuxième plateau (128) est disposé au-dessus du premier plateau (124) et forme un plateau supérieur, et dans lequel l'actionneur (126) est disposé au-dessus de la base (122).

11. Equipement (100) selon l'une des revendications 1 à 10, dans lequel ledit premier plateau (124) comporte des passages débouchant sur sa face tournée vers le deuxième plateau (128), ledit équipement comprenant en outre un système de maintien par dépression de la position du film (34) sur la plaque support (20), comportant une unité d'aspiration reliée auxdits passages du premier plateau (124), ledit système de maintien apte à permettre la tenue de la position du film (34) sur le premier plateau (124) lorsque ladite unité d'aspiration est activée.

12. Equipement (100) selon l'une des revendications 1 à 11, comprenant en outre une station de prédécoupage, disposée entre le mandrin amont (112) et la station d'assemblage (120), comprenant des moyens de coupe agencés pour permettre la réalisation d'une ligne discontinue de prédécoupes dans le ruban (30), ladite ligne discontinue épousant le contour dudit film (34) selon une forme apte à recouvrir la plaque support (20).

13. Equipement (100) selon l'une des revendications 1 à 12, comprenant en outre un bâti sur lequel est montée la station d'assemblage (120) et deux rouleaux de guidage comportant un rouleau de guidage amont (140) disposé parallèlement au mandrin amont (112), entre le mandrin amont (112) et la base (122), et un rouleau de guidage aval (142) disposé parallèlement au mandrin aval (114), entre le mandrin aval (114) et la base (122).

14. Equipement (100) selon la revendication précédente, dans lequel la génératrice desdits deux rouleaux de guidage située le plus bas est située en dessous du plan passant par la face libre du premier plateau (124) ou bien au-dessous et à moins de 1 centimètre dudit plan passant par la face libre du premier plateau (124).

15. Equipement (100) selon l'une des revendications 1 à 14, dans lequel ladite partie mobile (129) est agencée de sorte que lorsque le deuxième plateau (128) est en appui avec le premier plateau (124), le deuxième plateau (128) exerce une pression d'au moins 1 bar.

16. Equipement (100) selon la revendication 5, dans lequel le vérin est un vérin pneumatique.

17. Equipement (100) selon l'une des revendications 1 à 16, comprenant en outre une unité d'humidification située à proximité de la station d'assemblage (120), et apte à humidifier la face du film (34) en regard de la plaque de support ou bien apte à humidifier la face libre de la plaque support (20) lorsque ladite plaque support (20) est montée sur le premier plateau (124) ou sur le deuxième plateau (128).

18. Equipement (100) selon l'une des revendications 1 à 17, dans lequel la plaque support (20) est un porte-pièce dont les ouvertures traversantes (21) forment des alvéoles aptes à retenir une ou plusieurs pièces (26).

19. Equipement (100) selon l'une des revendications 1 à 18, comprenant en outre une unité de contrôle par vision, comprenant un système de prise de vue et un système de traitement et d'analyse d'images, l'unité de contrôle par vision étant apte à prendre des vues de la zone du premier plateau (124) et/ou du deuxième plateau (128).

20. Equipement (100) selon l'une des revendications 1 à 19, comprenant en outre une unité de chargement apte à amener une plaque support (20) dans ladite station d'assemblage (120) sur le deuxième plateau (128) ou sur le premier plateau (124), lorsque la partie mobile (129) de l'actionneur (126) est dans la première position.

21. Equipement (100) selon l'une des revendications 1 à 20, comprenant en outre une unité de déchargement apte à sortir ladite plaque support (20) recouverte dudit film (34) en dehors de ladite station d'assemblage (120) lorsque la partie mobile (129) de l'actionneur (126) est dans la première position.

22. Machine de chargement de pièces comprenant l'équipement selon l'une des revendications 1 à 21, un poste de réception de pièces à traiter (26) et un poste de réception de plaques-supports recouvertes dudit film (34).

23. Machine de chargement de pièces selon la revendication précédente, comprenant en outre un poste de chargement de pièces à traiter apte à prélever une plaque-support recouverte dudit film (34) dans le poste de réception de plaques-supports recouvertes dudit film (34), à prélever une pièce à traiter dans le poste de réception de pièces à traiter et à placer ladite pièce à traiter (26) dans une ouverture (21) de ladite plaque support (20).

24. Procédé de pose d'un film (34) sur une plaque support (20) présentant des ouvertures traversantes (21), comportant les étapes suivantes :
- on fournit une plaque support (20) formant un porte-pièce en forme de plaque,
- on fournit une bobine d'alimentation (40) portant un ruban (30) continu dont une portion est apte à former un film (34) destiné à recouvrir ladite plaque support (20),
- on fournit équipement comportant :
+ un mandrin amont (112) sur lequel on monte ladite bobine d'alimentation (40),
+ un mandrin aval (114) sur lequel on monte une bobine de récupération (42) apte à recevoir la portion restante du ruban (30) continu après séparation du film (34) du ruban (30) continu,
+ une station d'assemblage (120) disposée entre le mandrin amont (112) et le mandrin aval (114), ladite station d'assemblage (120) comprenant :
* une base (122) comportant un premier plateau (124),
* un actionneur (126) avec une partie mobile (129)
* un deuxième plateau (128) relié à l'extrémité libre de la partie mobile (129), dans lequel la partie mobile (129) est apte à passer de manière réversible d'une première position, dans laquelle le deuxième plateau (128) est distant du premier plateau (124), à une deuxième position dans laquelle le deuxième plateau (128) est en appui avec ledit premier plateau (124), et
dans lequel le deuxième plateau (128) est apte à coopérer avec ledit premier plateau (124), dans ladite deuxième position de la partie mobile (129), pour former un outillage apte à mettre en contact ledit film (34) et ladite plaque support (20),
- on place la partie mobile (129) dans ladite première position,
- on monte ladite plaque support (20) sur le deuxième plateau (128) ou le premier plateau (124),
- on place le ruban (30) continu de sorte que la portion du ruban (30) formant le film (34) est située entre le deuxième plateau (128) et le premier plateau (124),
- on place la partie mobile (129)dans ladite deuxième position, ce par quoi la plaque support (20) et le film (34) viennent en contact l'un sur l'autre et on obtient une plaque support (20) recouverte du film (34),
- on place la partie mobile (129) dans ladite première position et on libère la plaque support (20) recouverte du film (34) de ladite station d'assemblage (120).

25. Procédé de pose selon la revendication 24, dans lequel, avant de placer la portion du ruban (30) formant le film (34) entre le deuxième plateau (128) et le premier plateau (124), on réalise une ligne discontinue de prédécoupes dans le ruban (30), ladite ligne discontinue épousant le contour dudit film (34) selon une forme apte à recouvrir la plaque support (20).

26. Procédé de pose selon la revendication 24 ou 25, dans lequel ledit ruban (30) continu comporte une première couche en un premier matériau hydrosoluble ou liposoluble recouvert d'une deuxième couche en un deuxième matériau non-adhérent sur lui-même et sur le premier matériau, ledit ruban (30) étant disposé de sorte que le premier matériau est apte à faire face à la plaque support (20).

27. Procédé de pose selon la revendication 26, dans lequel ledit équipement comprend en outre une unité d'humidification située à proximité de la station d'assemblage (120), et apte à humidifier la face du film (34) en regard de la plaque de support, ou bien apte à humidifier la face libre de la plaque support (20) lorsque ladite plaque support (20) est montée sur le premier plateau (124) ou sur le deuxième plateau (128) et lorsque la partie mobile (129) est dans ladite première position.

28. Procédé de pose selon l'une parmi les revendications 24 à 27, dans lequel ledit premier plateau (124) comporte des passages débouchant sur sa face tournée vers le deuxième plateau (128), ledit équipement comprenant en outre un système de maintien par dépression de la position du film (34) sur la plaque support (20), comportant une unité d'aspiration (123) reliée auxdits passages du premier plateau (124), et dans lequel, avant de placer la partie mobile (129) dans ladite deuxième position, on active ladite unité d'aspiration, ce par quoi on maintient la position du film (34) sur le premier plateau (124), et on maintient l'activation de ladite unité d'aspiration pendant que la partie mobile (129) est dans ladite deuxième position.

29. Procédé de pose selon l'une parmi les revendications 24 à 28, dans lequel ledit actionneur (126) avec une partie mobile (129) est un vérin avec un piston à mouvement linéaire, ladite partie mobile (129) comprenant ledit piston, ledit vérin étant disposé en regard de la base (122), ledit vérin définissant un axe longitudinal sécant avec le premier plateau (124) et disposé de manière orthogonale avec le premier plateau (124), dans lequel ledit deuxième plateau (128) est relié à l'extrémité libre de la tige de piston.
